# EUROPEAN PATENT APPLICATION

(11) **EP 2 759 968 A1**
(43) Date of publication of application: **30.07.2014**
(21) Application number: 12834104.7
(22) Date of filing: 15.06.2012
(51) Int. Cl.: G06Q 20/00

(54) **TRANSACTION PAYMENT METHOD AND SYSTEM**

(30) Priority: 20.09.2011 CN 201110280122
(71) Applicant: Tencent Technology (Shenzhen) Co., Ltd, Guangdong 518044 (CN)
(72) Inventor: XIANG, Tao, Shenzhen Guangdong 518044 (CN); LIAO, Shaobo, Shenzhen Guangdong 518044 (CN); LIU, Tiehua, Shenzhen Guangdong 518044 (CN); ZHAO, Dapeng, Shenzhen Guangdong 518044 (CN); FENG, Yunxia, Shenzhen Guangdong 518044 (CN); CHENG, Min, Shenzhen Guangdong 518044 (CN)
(74) Representative: Liesegang, Eva
(86) International application number: PCT/CN2012/076994
(87) International publication number: WO 2013/040916

(57) **Abstract**

A transaction payment method, includes the following steps: acquiring payment information about a user, the payment information including a contact number; calling the contact number through an interactive voice response platform to acquire the payment password input by the user; and verifying the payment password and payment information, and performing payment if the verification is passed. The transaction payment method above can be applied to improve payment security. Additionally, also provided is a transaction payment system.

## Description

This application claims priority to Chinese Patent Application No. 2011102801227 with a title of "Transaction payment method and system" filed with the Chinese Patent Office on September 20, 2011, the entire contents of which being incorporated herein by reference.

### TECHNICAL FILED

This disclosure relates to network technology, and particularly to a transaction payment method and system.

### BACKGROUND ART

With the rapid development of the E-commerce and the improvement of the E-banking service, banks and third party payment methods keep innovating. The varieties of currently known payment methods, including many payment methods such as conventional POS payments, ATM payments, Internet banking payments, mobile banking, etc, offer people quick and easy payment methods and a convenient daily life.

Conventional payment methods commonly employ a single-channel transmission manner of information. For example, mobile banking, which depends on a network of a mobile operator and is based on WAP technology, provides a mobile user with financial services such as account inquiries, transferring, bill payments, consumption payments, and the like. For example, Internet payments and Internet banking payments transfer transaction data over an Internet channel or an instant communication channel.

However, there exist various security issues for these conventional transaction payments when confirming identity information of a user. For example, for mobile banking, the mobile phone might easily get lost; for Internet payments and Internet banking payments, usually only a user's password needs to be verified, so that it is the only way to verify the identity information of the user; when the user's computer terminal is infected by a Trojan virus, which easily causes data stolen. Thus, conventional transaction payments are not highly secured.

### SUMMARY OF THE INVENTION

In view of this, it is necessary to provide a transaction payment method with enhanced security.

A transaction payment method, comprising the steps of:
acquiring payment information of a user, the payment information including a contact number;
calling the contact number through an Interactive Voice Response platform to acquire a payment password input by the user;
calling the contact number through an Interactive Voice Response platform to acquire a payment password input by the user.

Preferable, the step of acquiring the payment information of the user is: over an Internet channel or an instant communication channel, acquiring the payment information of the user submitted by a payment terminal.

Preferable, the contact number is a mobile contact number; and before the step of calling the mobile contact number through the Interactive Voice Response platform, the method further comprises:
sending a short message verification code to a mobile terminal corresponding to the mobile contact number through a Short Message Service platform;
receiving a replied verification code returned by the mobile terminal;
determining whether the replied verification code is identical with the short message verification code, if so, the verification is passed; otherwise, the verification fails.

Preferable, before the step of calling the mobile contact number through the Interactive Voice Response platform, the method further comprises:
acquiring a mobile contact number of the mobile terminal which returns the replied verification code;
verifying whether the acquired mobile contact number is identical with a mobile contact number in account information stored in advance, if so, the verification is passed; otherwise, the verification fails.

Preferable, after the step that verifying the replied verification code is passed and/or the step that verifying the mobile contact number of the mobile terminal returning the replied verification code is passed, the method further comprises:
performing a risk information verification of the payment information.

Preferable, before the step of calling the contact number through the Interactive Voice Response platform, and/or after verifying the payment password is passed, the method further comprises:
performing a risk information verification of the payment information.

Preferable, the step of performing a risk information verification of the payment information comprises:
acquiring a transaction amount for merchant in the payment information, detecting whether the transaction amount for merchant is greater than a set threshold, if so, the verification fails; otherwise, the verification is passed; and/or
determining whether the user is a blacklist user according to the payment information, if so, the verification fails; otherwise, the verification is passed.

Preferable, the step of performing a risk information verification of the payment information further comprises:
determining whether the payment information is identical with the account information stored in advance, if so, the verification is passed; otherwise, the verification fails.

In addition, it is also necessary to provide a transaction payment system, which is able to enhance security.

A transaction payment system, comprising a telephone payment system and a bank system, wherein,
the telephone payment system includes:
a payment information acquiring module configured to acquire payment information of a user, the payment information including a contact number; and
an Interactive Voice Response platform configured to call the contact number, acquiring a payment password input by the user, and sending the payment password and the payment information to the bank system, and
the bank system is configured to verify the payment password and the payment information, and perform payment if the verifying is passed.

Preferable, the payment information acquiring module is configured to acquire the payment information of the user submitted by a payment terminal through an Internet channel or an instant communication channel. Preferable, the contact number is a mobile contact number; and the telephone payment system further includes a Short Message Service platform configured to send a short message verification code to the mobile terminal corresponding to the mobile contact number through a short messages, receive a replied verification code returned by the mobile terminal, and determine whether the replied verification code is identical with the short message verification code, if so, the verification is passed; otherwise, the verification fails.

Preferable, the Short Message Service platform is further configured to acquire a mobile contact number of the mobile terminal which returns the replied verification code, and to send the mobile contact number to the bank system; and
the bank system is further configured to verify whether the acquired mobile contact number is identical with a mobile contact number in account information stored in advance, if so, the verification is passed; otherwise, the verification fails.

Preferable, the telephone payment system further includes a risk control system configured to perform a risk information verification of the payment information after verifying the replied verification code is passed and/or verifying the mobile contact number of the mobile terminal returning the replied verification code is passed.

Preferable, the risk control system is further configured to perform a risk information verification of the payment information before the step of the telephone payment system calling the contact number through the Interactive Voice Response platform, and/or after verifying the payment password is passed.

Preferable, the risk control system is configured to acquire a transaction amount for merchant in the payment information, and to detect whether the transaction amount for merchant is greater than a set threshold, if so, the verification fails; otherwise, the verification is passed; and/or
the risk control system is configured to determine whether the user is a blacklist user according to the payment information, if so, the verification fails; otherwise, the verification is passed.

Preferable, the risk control system is further configured to send the payment information to the bank system, and
the bank system is further configured to determine whether the payment information is identical with the account information stored in advance, if so, the verification is passed; otherwise, the verification fails.

In the above mentioned transaction payment method and system, when receiving payment information, a telephone payment system automatically calls a mobile contact number in the payment information through an Interactive Voice Response platform, acquires a payment password input by a user and verifies the payment password and the payment information. Since a channel employed to acquire the payment information submitted by a payment terminal is different from that employed by the Interactive Voice Response platform, the possibility is reduced that a criminal intercept the users' payment information by a fake website, and a Trojan virus when the payment password and the payment information are verified.

### BRIEF DESCRIPTION OF THE DRAWINGS

Figure 1 is a schematic flowchart of a transaction payment method in an embodiment;
Figure 2 is a schematic flowchart of a transaction payment method in another embodiment;
Figure 3 is a flowchart of performing a risk information verification in an embodiment;
Figure 4 is a schematic configuration diagram of a transaction payment system in an embodiment; and
Figure 5 is a schematic configuration diagram of a telephone payment system in another embodiment.

### DETAILED DESCRIPTION OF THE PREFERRED EMBODIMENTS

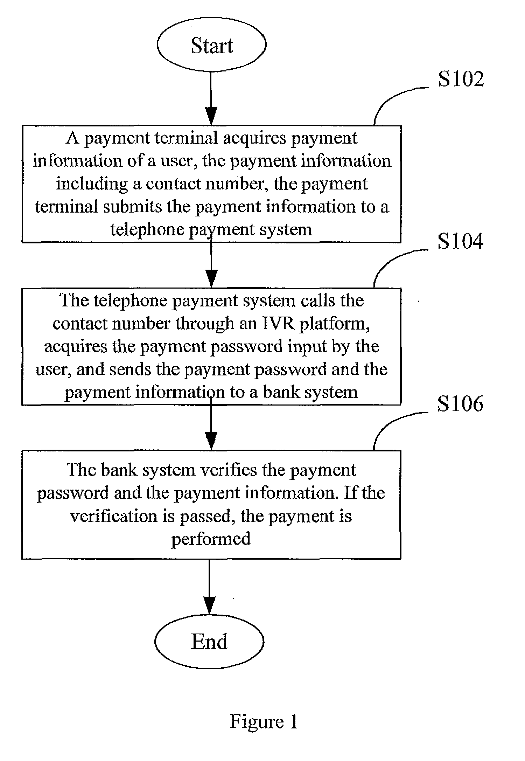

As shown in Figure 1, in an embodiment, a transaction payment method includes the following steps:

Step S102, a payment terminal acquires payment information of a user, the payment information including a contact number, and the payment terminal submits the payment information to a telephone payment system.

The payment terminal can be a computer, a TV, a mobile communication terminal and other embedded electronic equipment, which can submit an order through a Web browser and can also do through an instant communication tool, so as to generate order data. The order data include user information, merchant information, information of a purchased good, and the like, wherein the user information includes a user registered account, a user name, a receiving address, a contact manner, and the like; the merchant information is business information such as a store name, an address, a contact manner, and the like; the information of a purchased good includes a purchased amount, a purchased price, a payable amount, and the like.

After the order has been submitted by the payment terminal and a payment is confirmed, the payment information is acquired. The payment information of the user includes a bank card number, user identity information, and order-related information, wherein the user identity information includes, but is not limited to, ID information (including a user name, an ID number, and the like), a payment password, a contact number (which could be either a mobile contact number or a fixed contact number), an instant contact number, a contact address, and the like, and the order-related information includes a payable amount and so on. In one embodiment, after the order data have been submitted by the user, a hint box can pop up to prompt the user to fill in the payment information. Specifically, the payment terminal submits the payment information to the telephone payment system over an Internet channel or an instant communication channel, and the telephone payment system acquires the payment information of the user submitted by the payment terminal over the Internet channel or the instant communication channel.

Step S 104, the telephone payment system calls the contact number through an Interactive Voice Response (IVR) platform, acquires the payment password input by the user, and sends the payment password and the payment information to a bank system.

Specifically, the telephone payment system has the IVR platform set, through which the contact number in the payment information is called. The communication terminal corresponding to the contact number will receive the call, and when the user holding the communication terminal answers the call, the communication terminal establishes a connection with the IVR platform. The communication terminal will receive a voice prompt sent from the IVR platform over a voice channel. The user enters the payment password according to the voice prompt, and the terminal uploads the payment password to the telephone payment system, which composes the payment password and the payment information into a transaction message, and sends the same to the bank system.

Step S106, the bank system verifies the payment password and the payment information. If the verification is passed, the payment is performed.

Specifically, the bank system can be a bank payment system or a payment system on any transaction platform. The bank system stores account information of the user in advance, including ID information, a card number of an available bank card, a contact address, a mobile contact number, a payment password, and the like. After having received the payment password and the payment information, the bank system verifies whether the payment password input by the user is correct, and verifies whether the payment information matches the account information of the user. If correct, the verification is passed and a deduction proceeds directly.

In one embodiment, before the step S104, further included is a step of performing risk information verification of the payment information. The IVR platform only calls the contact number after the risk information verification of the payment information has been passed so that it is able to guarantee the security before calling. In this embodiment or another embodiment, after the verification of the payment password has been passed in the step S106, further included is a step of performing risk information verification of the payment information. Since the payment information can still be changed after the verification of the payment password has been passed, the deduction will be performed by the bank system only after the risk information verification of the payment information has been passed further enhances the security of the payment.

Since the payment information submitted by the payment terminal and the payment password acquired by the IVR platform are data-transmitted over different channels, respectively, it is possible to verify the payment information on both channels, so that the security will be enhanced. In addition, the telephone payment system acquires the payment password through IVR platform automatically calling the contact number in the payment information after receiving the payment information, which is able to ensure that the user providing the payment password is the holder of the terminal corresponding to the contact number, compared to the conventional way that the user initiatively calls the IVR platform to provide the payment password. If the payment password is stolen, it is also possible to prevent the payment effectively by automatically calling the provided contact number. Therefore, further security is enhanced.

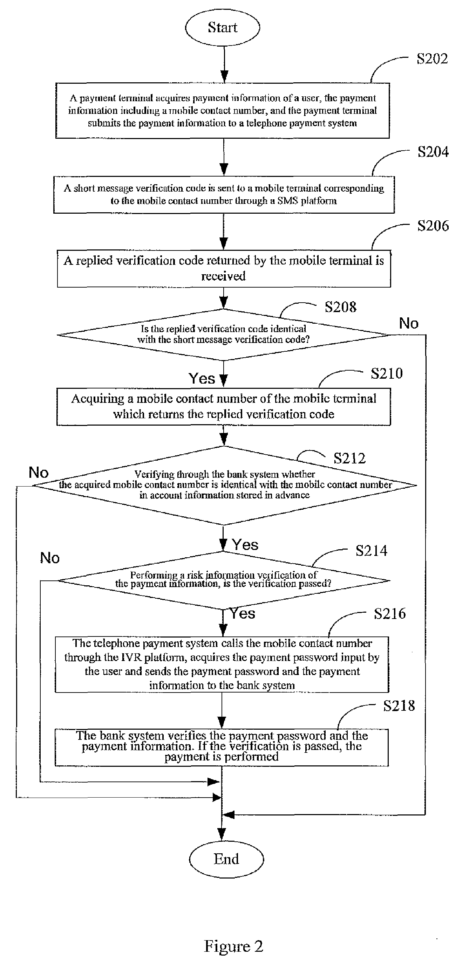

As shown in Figure 2, in another embodiment, a transaction payment method includes the following steps:
Step S202, a payment terminal acquires payment information of a user, the payment information including a mobile contact number, and the payment terminal submits the payment information to a telephone payment system.
Step S204, a short message verification code is sent to a mobile terminal corresponding to the mobile contact number through a Short Message Service(SMS) platform.
Step S206, a replied verification code returned by the mobile terminal is received.

Specifically, after the mobile terminal has received the short message, the user enters the replied verification code, and the replied verification code returns to the SMS platform.
Step S208, it is determined whether the replied verification code is identical with the short message verification code, if so, it proceeds to step S210, otherwise, it ends.

In one embodiment, if the replied verification code is not identical with the short message verification code, a short message can be sent to prompt the user that the returned verification code is not correct, and a payment cannot be accomplished. In this way, data are transferred over the short message channel and the payment information re-verified, which further enhance the security.
Step S210, acquired is a mobile contact number of the mobile terminal which returns the replied verification code.
Step S212, it is verified through the bank system whether the acquired mobile contact number is identical with the mobile contact number in account information stored in advance, if so, it proceeds to step S214, otherwise, it ends.

The account information of the user is stored in the bank system in advance, and includes the mobile contact number provided when the user applies for a bank card. If the mobile contact number acquired by the bank system is identical with the mobile contact number in the account information stored in advance, the verification is passed; otherwise, it fails.

In one embodiment, if the verification fails, the bank system can notify the telephone payment system which sends a short message to the mobile terminal through the SMS platform to prompt the user that the verification fails and the payment cannot be accomplished. A mobile contact number which returns the replied verification code is verified by the bank system, which ensures that the holder of the mobile terminal is the user of the bank card, avoiding a risk of losing money of the bank card due to losing of the mobile terminal, and thus the security is further enhanced.

In addition, since the short message verification code and the mobile contact number which acquires the returned replied verification code have been verified before the mobile contact number is called, a security issue caused by a call transfer of the mobile communication terminal can be avoided.
Step S214, a risk information verification of the payment information is performed, if the verification is passed, it proceeds to Step S216.
Step S216, the telephone payment system calls the mobile contact number through the IVR platform, acquires the payment password input by the user, and sends the payment password and the payment information to the bank system.

As discussed above, specifically, the mobile terminal corresponding to the mobile contact number can receive the call. After the user who holds the mobile terminal has answered the call, the mobile terminal establishes a connection with the IVR platform, and the mobile terminal can receive a voice prompt sent by the IVR platform over a voice channel. The user enters the payment password according to the voice prompt and the mobile terminal will upload the payment password to the telephone payment system, which organizes the payment password and the payment information into a transaction message, and sends the same to the bank system.
Step S218, the bank system verifies the payment password and the payment information. If the verification is passed, the payment is performed.

Specifically, the bank system verifies whether the payment password is correct, and verifies whether the payment information matches the account information of the user stored in advance. If the verification is passed, a deduction proceeds directly; otherwise, the telephone payment system will be notified and the IVR platform sends a voice prompt to the mobile terminal to prompt the user that the password input by the user is not correct or the payment information is not correct.

In one embodiment, the above mentioned step of performing a risk information verification of the payment information includes: acquiring a transaction amount for merchant in the transaction information, detecting whether the transaction amount for merchant is greater than a set threshold, if so, the verification fails; otherwise, it is passed. The transaction amount for merchant is a transaction amount of an order such as amount, money or the like of one transaction. A transaction with the amount, money exceeding a set threshold is considered to be risky (ex. the bank card might be stolen, and so on), and then the verification fails. In this way, it is possible to enhance the security of payment effectively.

In this embodiment or another embodiment, the step of performing a risk information verification of the payment information further includes determining whether the user is a blacklist user according to the payment information, if so, the verification fails; otherwise, it is passed. If there exists a poor record in the transaction of the user, for example, the payment information verification fails twice, the user will be considered as illegal, and then the user identity information is added to the blacklist. For those users in the blacklist, the verification will fail when it is under the risk information verification, that is, an illegal user cannot accomplish the payment. In this way, the illegal user is prevented from making a transaction again, which further enhances the security of payment.

In one embodiment, the step of performing a risk information verification of the payment information further includes: the telephone payment system sending the payment information to the bank system. The bank system determines if the payment information is identical with the account information stored in advance, if so, the verification is passed; otherwise, it fails.

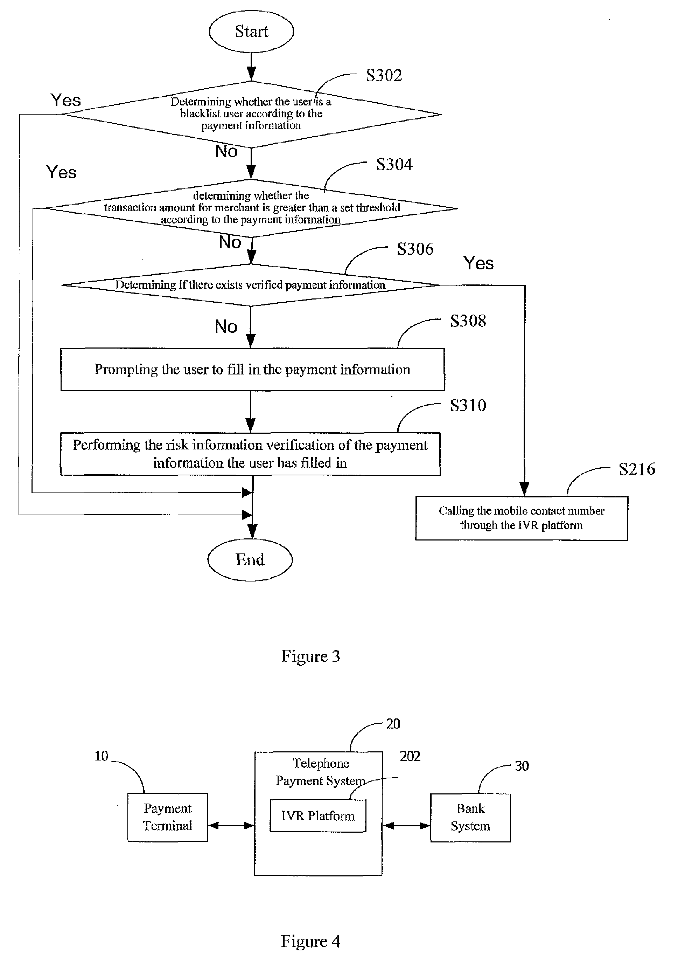

As shown in Figure 3, in one embodiment, at step S214, the process of performing a risk information verification of the payment information in specifically includes:
Step S302, determining whether the user is a blacklist user according to the payment information, if so, the flow ends; otherwise, it proceeds to step S304.
Step S304, determining whether the transaction amount for merchant is greater than a set threshold according to the payment information, if so, the flow ends; otherwise, it proceeds to step S306.
Step S306, determining if there exists verified payment information, if so, the flow proceeds to step S216 to proceed a subsequent flow; otherwise, it proceeds to step S308.
Step S308, prompting the user to fill in the payment information.
Step S310, Performing the risk information verification of the payment information the user has filled in.

The process of performing the risk information verification of the payment information at the step S310 is described as above, and a detailed description of which is omitted herein.

In one embodiment, even if the verification of the payment password has been passed at the step S218, the risk information verification can be again performed of the payment information, for example, determining whether the transaction amount for merchant is greater than a set threshold according to the payment information, and so on. Since it is possible that the user might change the payment information after the verification of the payment password has been passed, the security can be further enhanced by performing the risk information verification again.

As shown in Figure 4, in one embodiment, a transaction payment system includes a payment terminal 10, a telephone payment system 20, and a bank system 30, wherein:
the payment terminal 10 acquires payment information of a user, the payment information including a contact number, and the payment terminal 10 is further used to send the payment information to the telephone payment system 20;
the telephone payment system 20 includes an IVR platform 202 for calling the contact number, acquiring a payment password input by the user, and sending the payment password and the payment information to the bank system 30;
the bank system 30 is for verifying the payment password and the payment information, and if the verification is passed, a payment is performed.

In one embodiment, the user submits an order through the payment terminal 10. Data of the order include user information, merchant information, information of a purchased good, and the like, wherein the user information includes a user registered account, a user name, a receiving address, a contact manner, and the like; the merchant information is business information such as a store name, an address, a contact manner, and the like; the information of a purchased good includes a purchased amount, a purchased price, a payable amount, and the like.

After the order has been submitted by the payment terminal and the payment has been confirmed, the payment information of the user is acquired. The payment information of the user includes a bank card number, user identity information, and order-related information, wherein the user identity information includes, but is not limited to, ID information (including a user name, an ID number, and the like), a payment password, a contact number (which could be either a mobile contact number or a fixed contact number), an instant contact number, a contact address, and the like, and the order-related information includes a payable amount and so on. In one embodiment, after the order data have been submitted by the user, a hint box can pop up to prompt the user to fill in the payment information. Specifically, the payment terminal 10 submits the payment information to the telephone payment system 20 over an Internet channel or an instant communication channel.

Furthermore, the telephone payment system 20 can include a payment information acquiring model for acquiring the payment information of the user submitted by the payment terminal 10 over the Internet channel or the instant communication channel.

In one embodiment, the contact number in the payment information is called through the IVR platform 202. The communication terminal corresponding to the contact number will receive the call, and when the user holding the communication terminal answers the call, the communication terminal establishes a connection with the IVR platform 202. The communication terminal will receive a voice prompt sent from the IVR platform 202 over a voice channel. The user enters the payment password according to the voice prompt, and the terminal uploads the payment password to the telephone payment system 20, which composes the payment password and the payment information into a transaction message, and sends the same to the bank system 30.

Specifically, the bank system 30 can be a bank payment system or a payment system on any transaction platform. The bank system 30 stores the account information of the user in advance, including ID information of the user, a card number of an available bank card, a contact address, a mobile contact number, a payment password, and the like. After having received the payment password and the payment information, the bank system 30 verifies whether the payment password input by the user is correct, and verifies whether the payment information matches the account information of the user. If correct, the verification is passed and a deduction proceeds directly to accomplish the payment.

In one embodiment, the telephone payment system 20 further includes a kernel payment system (not shown) to manage orders and so on. After the bank system 30 has accomplished the payment, the kernel payment system will be notified to change the order status and return the order status to the payment terminal 10.

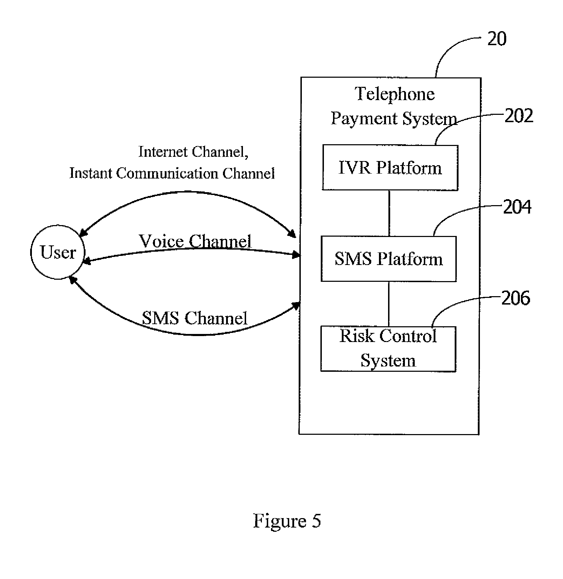

In another embodiment, as shown in Figure 5, the telephone payment system 20 further includes a short message service (SMS) platform 204 used to send a short message verification code to the mobile terminal corresponding to the mobile contact number in the payment information via a short message, to receive a replied verification code returned by the mobile terminal, and to determine whether the replied verification code is identical with the short message verification code, if so, the verification is passed; otherwise, it fails.

In one embodiment, the SMS platform 204 is further used to acquire a mobile contact number of the mobile terminal returning the replied verification code, and send the mobile contact number to the bank system 30. In the embodiment, the bank system 30 is further used to verify whether the acquired mobile contact number is identical with the mobile contact number in the account information stored in advance, if so, the verification is passed; otherwise, it fails.

In one embodiment, as shown in Figure 5, the telephone payment system 20 further includes a risk control system 206 to perform a risk information verification of the payment information after the verification of the replied verification code and/or the verification of the mobile contact number of the mobile terminal returning the replied verification code is passed.

In one embodiment, the risk control system 206 is further used to perform a risk information verification of the payment information before the step of the telephone payment system 20 calling the contact number through the IVR platform 202. In this embodiment or another embodiment, the risk control system 206 is further used to perform a risk information verification of the payment information after the verification of the payment password is passed.

In one embodiment, the risk control system 206 is used to acquire a transaction amount for merchant in the payment information, detecting whether the transaction amount for merchant is greater than a set threshold, if so, the verification fails; otherwise, it is passed. In this embodiment or another embodiment, the risk control system 208 is further used to determine whether the user is a blacklist user according to the payment information, if so, the verification fails; otherwise, it is passed.

In one embodiment, the risk control system 206 is further used to send the payment information to the bank system 30. In the embodiment, the bank system 30 is further used to determine whether the payment information is identical with the account information stored in advance, if so, the verification is passed; otherwise, it fails.

In the above transaction payment method and system, it is much more difficult to steal all the payment information of the user by collecting the payment information with multiple communication channels such as a mobile terminal, the Internet, a IVR platform, a SMS platform, and the like. Therefore, the security of non-face-to-face payment is improved.

In the above transaction payment method and system, the payment is secured by confirming the mobile terminal holder with the short message verification, confirming the information such as the ID, the mobile contact number, and the like of the bank card holder through the bank system, and confirming the user identity information over multiple communication channels.

Those of ordinary skills in the art can understand that all or part of the flow of the above method in the embodiments can be implemented by relevant hardware instructed with a computer program. The program can be stored in a computer-readable storage media. When the program is being executed, the flow of the respective methods in the embodiments can be included. The storage media herein can be a magnetic disk, an optical disc, a Read-Only-Memory (ROM), or a Random Access Memory (RAM), and the like.

The above mentioned embodiments only explain several modes for implementing the invention, the description of which are in detail and specific; however, they cannot be thus understood to limit the scope of the invention patent application. It should be noted that many variations and modifications can be made without departing from the concept of the invention by those of ordinary skills in the art, and they all fall within the scope of the invention. Thus, the scope of the invention patent application is only defined by the appended claims.

## Claims

1. A transaction payment method, comprising steps of:
acquiring payment information of a user, the payment information including a contact number;
calling the contact number through an Interactive Voice Response platform to acquire a payment password input by the user;
verifying the payment password and the payment information, and performing a payment if the verification is passed.

2. The transaction payment method of claim 1, wherein the step of acquiring the payment information of the user is: over an Internet channel or an instant communication channel, acquiring the payment information of the user submitted by a payment terminal.

3. The transaction payment method of claim 1, wherein the contact number is a mobile contact number; and before the step of calling the mobile contact number through the Interactive Voice Response platform, the method further comprises:
sending a short message verification code to a mobile terminal corresponding to the mobile contact number through a Short Message Service platform;
receiving a replied verification code returned by the mobile terminal;
determining whether the replied verification code is identical with the short message verification code, if so, the verification is passed; otherwise, the verification fails.

4. The transaction payment method of claim 3, wherein before the step of calling the mobile contact number through the Interactive Voice Response platform, further comprising:
acquiring a mobile contact number of the mobile terminal which returns the replied verification code;
verifying whether the acquired mobile contact number is identical with a mobile contact number in account information stored in advance, if so, the verification is passed; otherwise, the verification fails.

5. The transaction payment method of claim 4, wherein after the step that verifying the replied verification code is passed and/or the step that verifying the mobile contact number of the mobile terminal returning the replied verification code is passed, further comprising:
performing a risk information verification of the payment information.

6. The transaction payment method of claim 1, wherein before the step of calling the contact number through the Interactive Voice Response platform, and/or after verifying the payment password is passed, further comprising:
performing a risk information verification of the payment information.

7. The transaction payment method of claim 5 or 6, wherein the step of performing a risk information verification of the payment information comprises:
acquiring a transaction amount for merchant in the payment information, detecting whether the transaction amount for merchant is greater than a set threshold, if so, the verification fails; otherwise, the verification is passed; and/or
determining whether the user is a blacklist user according to the payment information, if so, the verification fails; otherwise, the verification is passed.

8. The transaction payment method of claim 7, wherein the step of performing a risk information verification of the payment information further comprises:
determining whether the payment information is identical with the account information stored in advance, if so, the verification is passed; otherwise, the verification fails.

9. A transaction payment system, comprising a telephone payment system and a bank system, wherein,
the telephone payment system includes:
a payment information acquiring module configured to acquire payment information of a user, the payment information including a contact number; and
an Interactive Voice Response platform configured to call the contact number, acquiring a payment password input by the user, and sending the payment password and the payment information to the bank system, and
the bank system configured to verify the payment password and the payment information, and perform a payment if the verification is passed.

10. The transaction payment system of claim 9, wherein the payment information acquiring module is configured to acquire the payment information of the user submitted by a payment terminal through an Internet channel or an instant communication channel.

11. The transaction payment system of claim 9, wherein the contact number is a mobile contact number; and the telephone payment system further includes a Short Message Service platform configured to send a short message verification code to the mobile terminal corresponding to the mobile contact number through a short message, receive a replied verification code returned by the mobile terminal, and determine whether the replied verification code is identical with the short message verification code, if so, the verification is passed; otherwise, the verification fails.

12. The transaction payment system of claim 11, wherein the Short Message Service platform is further configured to acquire a mobile contact number of the mobile terminal which returns the replied verification code, and to send the mobile contact number to the bank system; and
the bank system is further configured to verify whether the acquired mobile contact number is identical with a mobile contact number in account information stored in advance, if so, the verification is passed; otherwise, the verification fails.

13. The transaction payment system of claim 12, wherein the telephone payment system further includes a risk control system configured to perform a risk information verification of the payment information after verifying the replied verification code is passed and/or verifying the mobile contact number of the mobile terminal returning the replied verification code is passed.

14. The transaction payment system of claim 13, wherein the risk control system is further configured to perform a risk information verification of the payment information before the step of the telephone payment system calling the contact number through the Interactive Voice Response platform, and/or after verifying the payment password is passed.

15. The transaction payment system of claim 13 or 14, wherein the risk control system is configured to acquire a transaction amount for merchant in the payment information, and to detect whether the transaction amount for merchant is greater than a set threshold, if so, the verification fails; otherwise, the verification is passed; and/or
the risk control system is configured to determine whether the user is a blacklist user according to the payment information, if so, the verification fails; otherwise, the verification is passed.

16. The transaction payment system of claim 15, wherein the risk control system is further configured to send the payment information to the bank system, and
the bank system is further configured to determine whether the payment information is identical with the account information stored in advance, if so, the verification is passed; otherwise, the verification fails.
